# EUROPÄISCHE PATENTSCHRIFT

(11) **EP 1 120 221 B1**
(45) Veröffentlichungstag und Bekanntmachung des Hinweises auf die Patenterteilung: **02.04.2003**
(21) Anmeldenummer: 00810802.9
(22) Anmeldetag: 06.09.2000
(51) Int. Cl.: B29C 45/26

(54) **Spritzgusswerkzeug für die Herstellung von scheibenförmigen Informationsträgern**
Injection mould for producing disc-shaped information carriers
Moule d'injection pour fabriquer des supports d'information en forme de disque

(30) Priorität: 27.01.2000 CH 1612000
(43) Veröffentlichungstag der Anmeldung: 01.08.2001
(73) Patentinhaber: AWM Mold Tech AG, 5630 Muri AG (CH)
(72) Erfinder: Gabriel, Markus, 5632 Buttwil (CH)
(74) Vertreter: Isler & Pedrazzini AG

(56) Entgegenhaltungen:
- WO-A-99/37471
- DE-A- 4 410 015
- PATENT ABSTRACTS OF JAPAN vol. 17, no. 250 (P-1537), 18. Mai 1993 (1993-05-18) -& JP 04 368645 A (RICOH CO LTD), 21. Dezember 1992 (1992-12-21) -& DATABASE WPI Week 199305 Derwent Publications Ltd., London, GB; AN 1993-041899 XP002138634

## Beschreibung

### TECHNISCHES GEBIET

Die vorliegende Erfindung bezieht sich auf das Gebiet der Spritzgusstechnik. Sie betrifft ein Spritzgusswerkzeug für die Herstellung von scheibenförmigen Informationsträgern gemäss dem Oberbegriff des Anspruchs 1.

Ein solches Spritzgusswerkzeug ist z.B. aus der Druckschrift WO-A1-99/37471 bekannt.

### STAND DER TECHNIK

Zur Herstellung von optisch lesbaren Informationsträgern wie Audio-CDs, CD-ROMs, Video-CDs oder DVDs werden Spritzgusswerkzeuge eingesetzt, die mittels zweier gegenuberliegender, relativ zueinander beweglicher (zylindrischer) Spiegelplatten eine Spritzgussform bilden. Auf einer der beiden Spiegelplatten ist üblicherweise ein dünner, scheibenförmiger Stamper lösbar befestigt, der beim Spritzgiessen des sich formenden Informationsträgers die die Information enthaltenden Spuren einprägt. Am Aussenrand wird die Spritzgussform häufig durch einen Formring begrenzt, der die eine Spiegelplatte konzentrisch umgibt.

Der Formring steht über die ebene Formfläche der von ihm umschlossenen Spiegelplatte über und ist relativ zu dieser Spiegelplatte in axialer Richtung verschiebbar. Wird die Spritzgussform durch eine axiale Bewegung der beiden Spiegelplatten aufeinander zu geschlossen, setzt aufgrund des Ueberstandes der Formring auf der gegenüberliegenden Spiegelplatte auf und schliesst die Form, während die von ihm konzentrisch umschlossene Spiegelplatte von der gegenüberliegenden Spiegelplatte einen vorbestimmten Abstand hat. In den so gebildeten scheibenförmigen Hohlraum wird dann unter hohem Druck der heisse Kunststoff eingespritzt. Nachdem der Hohlraum der Spritzgussform gefüllt ist, wird - um eine hohe Qualität des Informationsträgers zu erreichen - die vom Formring umschlossene Spiegelplatte ein Stück weit auf die andere Spiegelplatte zubewegt, während der Formring ortsfest bleibt (siehe dazu Fig. 2 und 3 der eingangs genannten WO-A1-99/37471).

Die in dieser Phase des Herstellungsprozesses stattfindende Relativbewegung zwischen der Spiegelplatte und dem sie umschliessenden Formring wirft jedoch aus folgenden Gründen Probleme auf: Damit der Formring bei der Relativbewegung frei über die Spiegelplatte gleiten kann, ist eine bestimmte Passung notwendig. Ist diese Passung zu weit, kann beim Einspritzen Kunststoff in den Spalt dringen und bildet an der geformten Informationsträger-Scheibe einen unerwünschten Grat. Ist die Passung dagegen zu eng, kann es, insbesondere wenn sich Spiegelplatte und Formring auf unterschiedlichen Temperaturen befinden, zu hohen Reibungswerten kommen, welche die Relativbewegung behindern und - weil beide Teile in der Regel aus Stahl sind - möglicherweise zu einem Festfressen oder Klemmen des Formringes auf der Spiegelplatte führen.

Um bei relativ enger Passung eine geringe Gleitreibung zwischen Spiegelplatte und Formring zu gewährleisten, ist in der eingangs genannten WO-A1-99/37471 bereits vorgeschlagen worden, die aufeinander gleitenden Flächen der Spiegelplatte und des Formringes mit einer speziellen Beschichtung zu versehen, welche die Reibung herabsetzt. Nachteilig ist hierbei jedoch, dass die Beschichtung der Teile mit einem hohen Aufwand verbunden ist, und dass eine Beschichtung generell die Wärmeabfuhr aus der Spritzgussform beeinflusst.

In der EP-A1-0 899 075 ist zur Sicherstellung einer guten Relativbeweglichkeit zwischen einer Spiegelplatte und einem die Spiegelplatte konzentrisch umschliessenden Ring ein lineares Kugellager (75 in Fig. 5) zwischen den beiden Teilen vorgesehen. Der Ring ist hierbei jedoch kein Formring, der einen Teil der Spritzgussform bildet, sondern ist ein Führungsring, der die Zentrierung der beiden Spiegelplatten zueinander unterstützt.

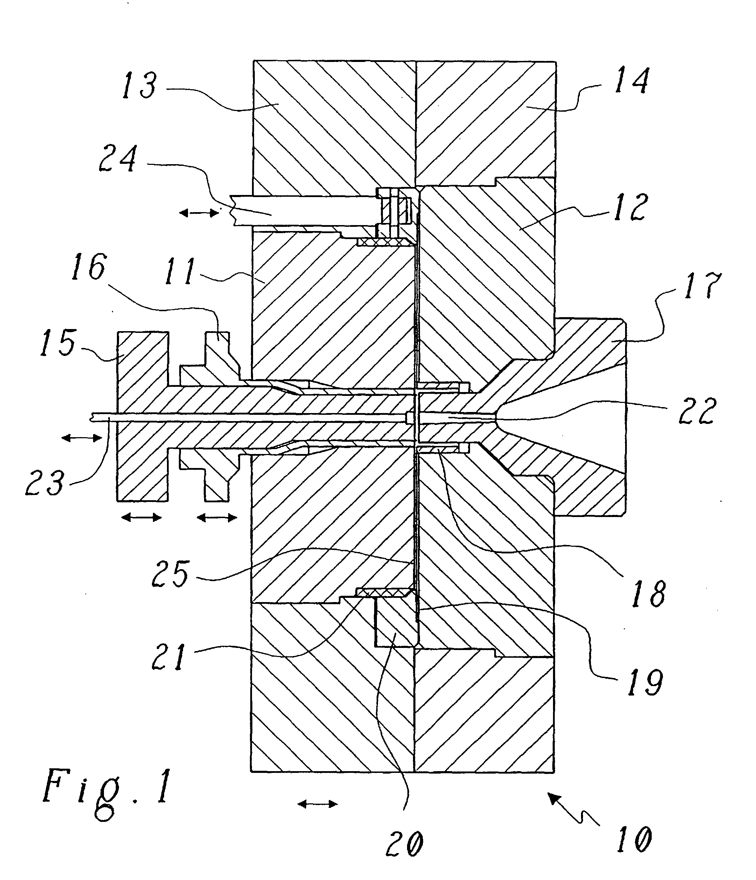

In der US-A-5,018,962 schliesslich ist ein zwei Spiegelplatten und einen Formring umfassendes Spritzgusswerkzeug für die Herstellung von CDs offenbart, bei dem zwischen dem Formring und der einen Spiegelplatte ein konzentrischer Haltering (15 in Fig. 1) für den auf dieser Spiegelplatte sitzenden Stamper vorgesehen ist. Der Formring gleitet beim Oeffnen und Schliessen über beide Spiegelplatten. Spezielle Vorkehrungen zur Reduzierung der Reibung bei diesen Gleitvorgängen sind jedoch nicht getroffen.

### DARSTELLUNG DER ERFINDUNG

Es ist daher Aufgabe der Erfindung, ein Spritzgusswerkzeug für die Herstellung von scheibenförmigen Informationsträgern zu schaffen, welches die Nachteile bekannter Spritzgusswerkzeuge vermeidet und sich insbesondere durch eine vereinfachte Herstellung auszeichnet, störungssicher und flexibel einsetzbar ist und die Herstellung qualitativ besonders hochwertiger Informationstrager-Scheiben ermöglicht.

Die Aufgabe wird durch die Gesamtheit der Merkmale des Anspruchs 1 gelöst. Der Kern der Erfindung besteht dann, zwischen den übereinander gleitenden Teilen des Spritzgusswerkzeuges, nämlich der ersten Spiegelplatte und dem sie umschliessenden Formring, einen speziellen Gleitring vorzusehen, der eine direkte Reibung zwischen Spiegelplatte und Formring verhindert. Da der Gleitring ein separates Bauteil ist, kann er bei Bedarf leicht ausgewechselt oder ersetzt werden, ohne dass die übrigen Teile des Spritzgusswerkzeuges verändert werden müssen; entsprechend lassen sich durch eine freie Wahl des Gleitring-Werkstoffes die Gleiteigenschaften optimieren. Da der Gleitring zwangsläufig einen randseitigen Teil der Spritzgussform bildet, kann durch geeignete Formgebung und Auswahl die Form des Spritzgussteils beeinflusst werden. Schliesslich ist es möglich, durch eine spezielle Wahl des Gleitring-Werkstoffes die Wärmeabfuhr im Randbereich der Spritzgussform zu verbessern.

Eine erste bevorzugte Ausführungsform des erfindungsgemässen Spritzgusswerkzeuges zeichnet sich dadurch aus, dass der Gleitring aus einem die Gleitreibung herabsetzenden Material, insbesondere aus Kupfer, einer Kupferlegierung wie Bronze oder auch aus einem Kunsstoffmaterial wie Teflon besteht. Hierdurch lassen sich gleichermassen gute Gleiteigenschaften und gute thermische Leitfähigkeiten im Randbereich der Spritzgussform realisieren. Der Gleitring könnte auch mit einer reibungsvermindernden Beschichtung, z.B. einer PVD-Beschichtung (PVD = phyical vapor deposit), versehen sein.

Eine Beeinflussung der Form des Spritzgussteils über eine entsprechende Formgebung des Gleitringes nach der Erfindung lässt sich auf verschiedene Weise erreiche: Wenn die erste Spiegelplatte die Spritzgussform mit einer im wesentlichen ebenen Fläche begrenzt, und der Gleitring mit seiner der Spritzgussform zugewandten Stirnseite bündig an die ebene Fläche der ersten Spiegelplatte anschliesst und diese nach aussen hin vergrossert, ergibt sich ein Spritzgussteil mit bis an den Aussenrand ebener Unterseite.

Wenn dagegen der Gleitring an seiner der Spritzgussform zugewandten Stirnseite eine Anschrägung aufweist, derart, dass der in der Spritzgussform hergestellte Informationsträger an seiner Aussenkante eine Anphasung aufweist, ist das Spritzgussteil entsprechend mit einer Anphasung versehen.

Wenn schliesslich der Gleitring an seiner der Spritzgussform zugewandten Stirnseite eine umlaufende Vertiefung aufweist, derart, dass der in der Spritzgussform hergestellte Informationsträger an seiner Aussenkante einen erhöhten, ringförmigen Kratzschutz aufweist, ist das Spritzgussteil entsprechend mit einem Kratzschutz in Form eines Ringwulstes versehen.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einem Längsschnitt ein bevorzugtes Ausführungsbeispiel eines Spritzgusswerkzeuges nach der Erfindung in einer vereinfachten Darstellung;
- Fig. 2: ein erstes Ausführungsbeispiel eines Gleitringes nach der Erfindung mit bündig anschliessender Stirnseite (Fig. 2c) und die Randbereiche einer daraus resultierenden fertigen CD (Fig. 2a) bzw. DVD (Fig. 2b);
- Fig 3: ein zweites Ausfuhrungsbeispiel eines Gleitringes nach der Erfindung mit angeschrägter Stirnseite (Fig 3c) und die Randbereiche einer daraus resultierenden fertigen CD (Fig. 3a) bzw. DVD (Fig. 3b); und
- Fig. 4: ein drittes Ausführungsbeispiel eines Gleitringes nach der Erfindung mit umlaufender Vertiefung in der Stirnseite (Fig. 4c) und die Randbereiche einer daraus resultierenden fertigen CD (Fig. 4a) bzw. DVD (Fig. 4b)

### WEGE ZUR AUSFÜHRUNG DER ERFINDUNG

In Fig. 1 ist in einem Längsschnitt ein bevorzugtes Ausführungsbeispiel eines Spritzgusswerkzeuges nach der Erfindung wiedergegeben. Die Figur ist dabei insoweit vereinfacht, als auf die Darstellung der notwendigen Verschraubungen, Federn, Dichtungen und Bedienelemente verzichtet worden ist. Das im geschlossenen Zustand gezeigte Spritzgusswerkzeug 10 umfasst als zentrale Bestandteile eine erste (linke) Spiegelplatte 11, eine zweite (rechte) Spiegelplatte 12 und einen die erste Spiegelplatte 11 konzentrisch umschliessenden Formring (venting ring) 20, die zusammen die Spritzgussform 25 bilden. Die Spiegelplatten 11, 12 sind jeweils in einen sie konzentrisch umgebenden Zentrierring 13 bzw. 14 eingepasst. Die Information wird beim Spritzen in das Spritzgussteil (die CD) mittels eines Stampers 19 eingeprägt, der als dünne Scheibe an der Formfläche der zweiten Spiegelplatte 12 anliegt und im Zentrum durch einen buchsenförmigen Stamperhalter 18 gehalten wird. Für den Anschluss des Spritzgusswerkzeuges 10 an die Düse der (nicht dargestellten) Spritzgussmaschine ist eine durch das Zentrum der zweiten Spiegelplatte 12 bis in die Spritzgussform 25 reichende Angussbuchse 17 vorgesehen, die sich konisch nach aussen hin öffnet.

Der Angussbuchse 17 gegenüber sind konzentrisch ineinander liegend und (angedeutet durch die Doppelpfeile) relativ zueinander beweglich eine Ausstosshülse 16, eine Stanze 15 und ein Angussausstosser 23 angeordnet Mit dem Angussausstosser 23 kann der in der inneren Bohrung der Angussbuchse 17 verbleibende Anguss 22 ausgestossen werden. Mit der Stanze 15 wird die zentrale Oeffnung in der gespritzten CD ausgestanzt. Mit der Ausstosshülse 16 schliesslich kann die fertige CD nach dem Oeffnen der Spritzgussform 25 ausgestossen werden.

Der Formring 20 ist im Zentrierring 13 verschiebbar gelagert und wird durch (nicht dargestellte) Federn in Richtung auf die zweite Spiegelplatte 12 gedrückt. Er kann über ein pneumatisch angetriebenen Betätigungselement 24 zurückgezogen werden. Gemass der Erfindung liegt der Formring 20 mit seiner Innenseite nicht direkt an der Aussenseite der ersten Spiegelplatte 11 an, sondern ist von dieser durch einen Gleitring 21 getrennt, der konzentrisch auf der Aussenseite der ersten Spiegelplatte 11 in einem dafür vorgesehenen Absatz sitzt. Der Gleitring 21 hat im wesentlichen die Form eines Hohlzylinders und besteht vorzugsweise aus Kupfer, einer Kupferlegierung wie Bronze oder auch aus einem Kunststoffmaterial wie Teflon®. Er bildet damit für den aus Stahl bestehenden Formring 20 und die aus Stahl bestehende erste Spiegelplatte 11 ein thermisch gut leitendes Gleitlager, das im Randbereich der Spritzgussform 25 für eine verbesserte Wärmeabfuhr und damit für verbesserte optische und elektrische Werte im Aussenbereich der CD sorgt. Aufgrund der guten Gleiteigenschaften kann eine relativ enge Passung zwischen dem Gleitring 21 und der ersten Spiegelplatte 11 gewählt werden, so dass die Gratbildung zwischen Spiegelplatte 11 und Formring 20 deutlich verringert wird.

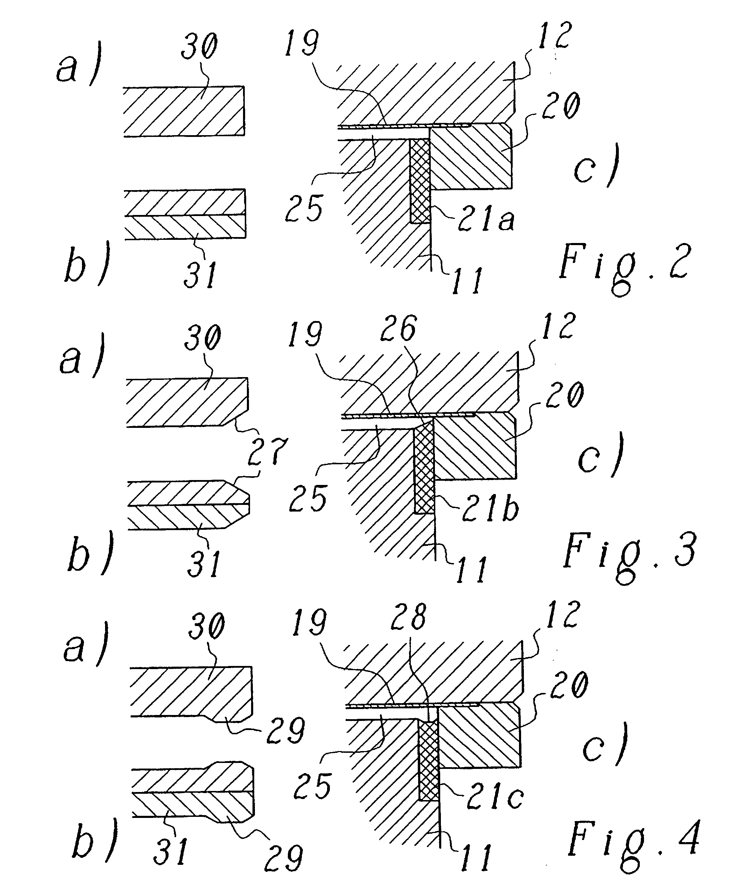

Zusätzlich zu den bereits aufgeführten Vorteilen hinsichtlich der erreichbaren Qualität ermöglicht die Einführung des Gleitringes 21 einen zusätzlichen Freiheitsgrad bei der Formgestaltung der gespritzten CD, weil die eine Stirnseite des Gleitringes ein Teil der Spritzgussform ist. Dieser Vorteil kann anhand der Fig. 2 bis 4 erläutert werden, wobei die Teilfiguren (c) jeweils die Querschnittsform des verwendeten Gleitringes zeigen, und die Teilfiguren (a) und (b) jeweils die daraus resultierenden Randformen für eine CD (Teilfigur a) bzw für eine aus zwei Teilscheiben zusammengesetzte DVD (Teilfigur b).

Im Fall der Fig. 2 ist die der Spritzgussform 25 zugewandte Stirnseite des Gleitringes 21a eben und schliesst bündig an die erste Spiegelplatte 11 an. Die Unterseite der fertigen CD 30 (Fig. 2a) bzw. die Ober- und Unterseite der fertigen DVD 31 (Fig. 2b) sind entsprechend bis zum Aussenrand eben ausgebildet.

Im Fall der Fig. 3 ist die der Spritzgussform 25 zugewandte Stirnseite des Gleitringes 21b als Anschrägung 26 ausgeführt. Die Unterseite der fertigen CD 30 (Fig. 3a) bzw. die Ober- und Unterseite der fertigen DVD 31 (Fig. 3b) sind entsprechend am Aussenrand mit einer Anphasung 27 versehen.

Im Fall der Fig. 4 schliesslich ist die der Spritzgussform 25 zugewandte Stirnseite des Gleitringes 21c als umlaufende Vertiefung 28 ausgebildet. Die Unterseite der fertigen CD 30 (Fig. 4a) bzw. die Ober- und Unterseite der fertigen DVD 31 (Fig. 4b) sind entsprechend am Aussenrand mit einem Kratzschutz 29 in Form einer Ringwulst versehen.

Es versteht sich von selbst, dass durch andere Formgebungen für den Gleitring 21 auch andere Formen im Randbereich der fertigen CD bzw. DVD erzeugt werden können.

Insgesamt ergibt sich mit der Erfindung ein Spritzgusswerkzeug für die Herstellung von scheibenförmigen Informationsträgern (CDs, DVDs etc.), das sich durch die folgenden Eigenschaften und Vorteile auszeichnet:
- Verbesserte Gleiteigenschaften zwischen Spiegelplatte und Formring;
- grösseres Funktionsfenster bei unterschiedlicher Temperaturdifferenz von Spiegelplatte und Formring;
- Verbesserung der optischen Qualität am Substrat des Informationsträgers speziell im Aussenbereich;
- verbesserte Kuhleigenschaften aussen und dadurch bessere optische und elektrische Werte im Aussenbereich des Informationsträgers;
- neue Geometrien möglich (Anphasung, Kratzschutz etc.);
- Reduktion der Gratbildung zwischen Spiegelplatte und Formring.

### BEZUGSZEICHENLISTE

- 10: Spritzgusswerkzeug
- 11,12: Spiegelplatte (mirror block)
- 13,14: Zentrierring (centering ring)
- 15: Stanze (punch)
- 16: Ausstosshülse (ejector sleeve)
- 17: Angussbuchse (sprue bush)
- 18: Stamperhalter (stamper holder)
- 19: Stamper
- 20: Formring (form or venting ring)
- 21,21a,b,c: Gleitring
- 22: Anguss
- 23: Angussausstosser
- 24: Betätigungselement (Formring)
- 25: Spritzgussform (Hohlraum)
- 26: Anschrägung
- 27: Anphasung
- 28: Vertiefung (umlaufend)
- 29: Kratzschutz
- 30: CD
- 31: DVD

## Patentansprüche

1. Spritzgusswerkzeug (10) für die Herstellung von scheibenförmigen Informationsträgern. insbesondere in Form von CDs (30) und/oder DVDs (31), welches Spritzgusswerkzeug (10) zur Bildung einer Spritzgussform (25) eine erste und eine zweite Spiegelplatte (11 bzw. 12) umfasst, die einander gegenüberliegen und zum Oeffnen und Schliessen der Form relativ zueinander beweglich sind, sowie einen Formring (20), welcher die erste Spiegelplatte (11) konzentrisch umschliesst und die Spritzgussform (25) zum äusseren Rand hin abschliesst und relativ zur ersten Spiegelplatte (11) beweglich ist, wobei zwischen der ersten Spiegelplatte (11) und dem sie umschliessenden Formring (20) Mittel zur Verringerung der Reibung bei einer Bewegung des Formringes (20) relativ zur ersten Spiegelplatte (11) vorgesehen sind, **dadurch gekennzeichnet, dass** die Mittel einen konzentrisch zwischen der ersten Spiegelplatte (11) und dem sie umschliessenden Formring (20) angeordneten Gleitring (21; 21a,b,c) umfassen.

2. Spritzgusswerkzeug nach Anspruch 1, **dadurch gekennzeichnet, dass** der Gleitring (21; 21a,b,c) aus einem die Gleitreibung herabsetzenden Material besteht.

3. Spritzgusswerkzeug nach Anspruch 2, **dadurch gekennzeichnet, dass** der Gleitring (21; 21a,b,c) aus Kupfer, einer Kupferlegierung wie Bronze oder auch aus einem Kunsstoffmaterial wie Teflon besteht.

4. Spritzgusswerkzeug nach einem der Anspruche 1 bis 3, **dadurch gekennzeichnet, dass** die erste Spiegelplatte (11) die Spritzgussform (25) mit einer im wesentlichen ebenen Fläche begrenzt, und dass der Gleitring (21a) mit seiner der Spritzgussform (25) zugewandten Stirnseite bündig an die ebene Fläche der ersten Spiegelplatte (11) anschliesst und diese nach aussen hin vergrössert.

5. Spritzgusswerkzeug nach einem der Anspruche 1 bis 3, **dadurch gekennzeichnet, dass** die erste Spiegelplatte (11) die Spritzgussform (25) mit einer im wesentlichen ebenen Fläche begrenzt, und dass der Gleitring (21b) an seiner der Spritzgussform (25) zugewandten Stirnseite eine Anschrägung (26) aufweist, derart, dass der in der Spritzgussform (25) hergestellte Informationsträger (30, 31) an seiner Aussenkante eine Anphasung (27) aufweist

6. Spritzgusswerkzeug nach einem der Ansprüche 1 bis 3, **dadurch gekennzeichnet, dass** die erste Spiegelplatte (11) die Spritzgussform (25) mit einer im wesentlichen ebenen Fläche begrenzt, und dass der Gleitring (21c) an seiner der Spritzgussform (25) zugewandten Stirnseite eine umlaufende Vertiefung (28) aufweist, derart, dass der in der Spritzgussform (25) hergestellte Informationsträger (30, 31) an seiner Aussenkante einen erhöhten, ringförmigen Kratzschutz (29) aufweist.

7. Spritzgusswerkzeug nach einem der Ansprüche 1 bis 6, **dadurch gekennzeichnet, dass** der Gleitring (21; 21a,b,c) auf der ersten Spiegelplatte (11) sitzt.

8. Spritzgusswerkzeug nach einem der Ansprüche 1 bis 7, **dadurch gekennzeichnet, dass** der Gleitring (21; 21a,b,c) mit einer reibungsvermindernden Beschichtung versehen ist.

## Claims

1. Injection-moulding tool (10) for the production of information carriers in disc form, in particular in the form of CDs (30) and/or DVDs (31), which injection-moulding tool (10) comprises for the forming of an injection mould (25) a first and a second mirror block (11 and 12, respectively), which lie opposite each other and are movable in relation to each other for opening and closing the mould, and also a form ring (20), which concentrically encloses the first mirror block (11) and closes off the injection mould (25) towards the outer edge and is movable in relation to the first mirror block (11), means for reducing the friction when there is a movement of the form ring (20) in relation to the first mirror block (11) being provided between the first mirror block (11) and the form ring (20) enclosing it, **characterized in that** the means comprise a sliding ring (21; 21a,b,c) arranged concentrically between the first mirror block (11) and the form ring (20) enclosing it.

2. Injection-moulding tool according to Claim 1, **characterized in that** the sliding ring (21; 21a,b,c) consists of a material reducing the sliding friction.

3. Injection-moulding tool according to Claim 2, **characterized in that** the sliding ring (21; 21a,b,c) consists of copper, a copper alloy such as bronze or else a plastics material such as Teflon.

4. Injection-moulding tool according to one of Claims 1 to 3, **characterized in that** the first mirror block (11) bounds the injection mould (25) with an essentially planar surface, and **in that** the sliding ring (21a) adjoins the planar surface of the first mirror block (11) with its end face facing the injection mould (25) in such a way that it is flush with it, and enlarges it towards the outside.

5. Injection-moulding tool according to one of Claims 1 to 3, **characterized in that** the first mirror block (11) bounds the injection mould (25) with an essentially planar surface, and **in that** the sliding ring (21 b) has a bevel (26) on its end face facing the injection mould (25) in such a way that the information carrier (30, 31) produced in the injection mould (25) has a chamfer (37) at its outer edge.

6. Injection-moulding tool according to one of Claims 1 to 3, **characterized in that** the first mirror block (11) bounds the injection mould (35) with an essentially planar surface, and **in that** the sliding ring (21c) has a peripheral depression (28) on its end face facing the injection mould (25) in such a way that the information carrier (30, 31) produced in the injection mould (25) has an elevated, annular scratch guard (29) at its outer edge.

7. Injection-moulding tool according to one of Claims 1 to 6, **characterized in that** the sliding ring (21; 21a,b,c) rests on the first mirror block (11).

8. Injection-moulding tool according to one of the claims 1 to 7, **characterized in that** the sliding ring (21; 21a,b,c) is provided with a friction-reducing coating.

## Revendications

1. Outil de moulage par injection (10) pour la fabrication de supports d'informations en forme de disques, notamment sous la forme de disques compacts CD (30) et/ou de disques DVD (31), lequel outil de moulage par injection (10) comprend, pour la formation d'un moule d'injection (25), des première et seconde plaques miroirs, qui sont situées en vis-à-vis l'une de l'autre et sont déplaçables l'une par rapport à l'autre pour ouvrir et fermer le moule, ainsi qu'un anneau de moule (20), qui entoure concentriquement la première plaque miroir (11) et ferme le moule d'injection (25) en direction du bord extérieur et est déplaçable par rapport à la première plaque miroir (11), et dans lequel il est prévu entre la première plaque miroir (11) et l'anneau de moule (20) qui l'entoure, des moyens pour réduire le frottement lors d'un déplacement de l'anneau de moule (20) par rapport à la première plaque miroir (11), **caractérisé en ce que** les moyens comprennent un anneau coulissant (21; 21a,b,c) disposé concentriquement entre la première plaque miroir (11) et l'anneau de moule (20) qui l'entoure.

2. Outil de moulage par injection selon la revendication 1, **caractérisé en ce que** l'anneau coulissant (21; 21a,b,c) est réalisé en un matériau qui réduit le frottement avec glissement.

3. Outil de moulage par injection selon la revendication 2, **caractérisé en ce que** l'anneau coulissant (21; 21a,b,c) est réalisé en cuivre, en alliage de cuivre tel que du bronze ou même en une matière plastique.

4. Outil de moulage par injection selon l'une des revendications 1 à 3, **caractérisé en ce que** la première plaque miroir (11) limite le moule d'injection (25) par une surface essentiellement plane et que l'anneau coulissant (21a) se termine, par sa face frontale tournée vers le moule d'injection (25), au niveau de la surface plane de la première plaque miroir (11) et agrandit cette dernière en direction de l'extérieur.

5. Outil de moulage par injection selon l'une des revendications 1 à 3, **caractérisé en ce que** la première plaque miroir (11) limite le moule d'injection (25) avec une surface éventuellement plane, et l'anneau coulissant (21b) comporte, sur sa face frontale tournée vers le moule d'injection (25) un biseau (26) de telle sorte que le support d'information (30, 31) réalisé dans le moule d'injection (25) possède un biseau (27) sur son bord extérieur.

6. Outil de moulage par injection selon l'une des revendications 1 à 3, **caractérisé en ce que** la première plaque miroir (11) limite le moule d'injection (25) par une surface essentiellement plane et l'anneau coulissant (21c) comporte, sur sa face frontale tournée vers le moule d'injection (25), un renfoncement périphérique (28) de telle sorte que le support d'information (30, 31), qui est fabriqué dans le moule d'injection (25), comporte sur son bord extérieur un système annulaire surélevé de protection contre les rayures (29).

7. Outil de moulage par injection selon l'une des revendications 1 à 6, **caractérisé en ce que** l'anneau coulissant (21; 21a,b,c) prend appui sur la première plaque miroir (11).

8. Outil de moulage par injection selon l'une des revendications 1 à 7, **caractérisé en ce que** l'anneau coulissant (21; 21,a,b,c) comporte un revêtement qui réduit le frottement.
